# EUROPEAN PATENT APPLICATION

(11) **EP 4 529 255 A1**
(43) Date of publication of application: **26.03.2025**
(21) Application number: 23878612.3
(22) Date of filing: 08.05.2023
(51) Int. Cl.: H04W 16/28

(54) **BEAM CONTROL METHOD, INFORMATION ACQUISITION METHOD, COMMUNICATION NODE AND MEDIUM**

(30) Priority: 17.10.2022 CN 202211271479
(71) Applicant: ZTE Corporation, Shenzhen, Guangdong 518057 (CN)
(72) Inventor: SUN, Bo, Shenzhen, Guangdong 518057 (CN); ZHI, Zhou, Shenzhen, Guangdong 518057 (CN)
(74) Representative: Aipex B.V.
(86) International application number: PCT/CN2023/092772
(87) International publication number: WO 2024/082614

(57) **Abstract**

Provided are a beam control method, an information acquisition method, a communication node, and a medium. The beam control method is applied to a first communication node. The method includes acquiring first sensing data for a second communication node; based on the first sensing data, determining a first beam parameter of a first beam, a second beam parameter of a second beam, and a device parameter of a multipath auxiliary device; adjusting the multipath auxiliary device based on the device parameter; and controlling an antenna array based on the first beam parameter and the second beam parameter, where the same information carried by the first beam and the second beam is received by the second communication node.

## Description

This application claims priority to Chinese Patent Application No. 202211271479.3 filed with the China National Intellectual Property Administration (CNIPA) on Oct. 17, 2022, the disclosure of which is incorporated herein by reference in its entirety.

### TECHNICAL FIELD

The present application relates to the field of communications, for example, a beam control method, an information acquisition method, a communication node, and a medium.

### BACKGROUND

Integrated sensing and communications (ISAC) refers to the fusion of communication and sensing, enabling a future communication system to possess both the communication function and the sensing function.

In the related studies, in the ISAC scenario, the signal-to-noise ratio may decrease due to distance fading, resulting in a decrease in reception performance; or the beam may be lost due to the beam obstruction.

Therefore, how to improve the communication performance in the ISAC scenario is a current technical problem that needs to be solved urgently.

### SUMMARY

The present application provides a beam control method, an information acquisition method, a communication node, and a medium.

In a first aspect, the present application provides a beam control method. The beam control method is applied to a first communication node. The method includes: acquiring first sensing data for a second communication node; determining, based on the first sensing data, a first beam parameter of a first beam, a second beam parameter of a second beam, and a device parameter of a multipath auxiliary device; adjusting the multipath auxiliary device based on the device parameter; and controlling an antenna array based on the first beam parameter and the second beam parameter. The same information carried by the first beam and the second beam is received by the second communication node.

In a second aspect, the present application provides an information acquisition method. The information acquisition method is applied to a second communication node. The method includes: receiving a first beam and a second beam of a first communication node, where a beam parameter of the first beam and a beam parameter of the second beam are determined based on first sensing data for the second communication node acquired by the first communication node, and the second beam is sent to the second communication node after passing through a multipath auxiliary device of the first communication node; and acquiring the same information carried by the first beam and the second beam.

In a third aspect, the present application provides a first communication node. The first communication node includes one or more processors; a storage apparatus configured to store one or more programs; and an antenna array and a multipath auxiliary device at a set distance from the antenna array, where the multipath auxiliary device is configured to send a second beam of the antenna array to a second communication node. When executed by the one or more processors, the one or more programs cause the one or more processors to perform the beam control method according to the first aspect of the present application.

In a fourth aspect, the present application provides a second communication node. The second communication node includes one or more processors; and a storage apparatus configured to store one or more programs. When executed by the one or more processors, the one or more programs cause the one or more processors to perform the information acquisition method according to the second aspect of the present application.

In a fifth aspect, the present application provides a storage medium storing a computer program which, when executed by a processor, causes the processor to perform the beam control method or the information acquisition method.

The preceding embodiments and other aspects of the present application and implementations thereof are described in more detail in the brief description of drawings, detailed description, and claims.

### BRIEF DESCRIPTION OF DRAWINGS

FIG. 1 is a schematic diagram of an application scenario of a smart metasurface in the related art.
FIG. 2 is a schematic diagram of another application scenario of a smart metasurface in the related art.
FIG. 3 is a flowchart of a beam control method according to an embodiment of the present application.
FIG. 4 is a flowchart of an information acquisition method according to an embodiment of the present application.
FIG. 5 is a schematic diagram illustrating a scenario of acquiring prior information according to an embodiment of the present application.
FIG. 6 is a schematic diagram of a beam alignment scenario according to an embodiment of the present application.
FIG. 7 is a schematic diagram of a scenario of enhancing received power by designing an electromagnetic environment using a smart metasurface according to an embodiment of the present application.
FIG. 8 is a structural diagram of a beam control apparatus according to an embodiment of the present application.
FIG. 9 is a structural diagram of an information acquisition apparatus according to an embodiment of the present application.
FIG. 10 is a structural diagram of a first communication node according to an embodiment of the present application.
FIG. 11 is a structural diagram of a second communication node according to an embodiment of the present application.

### DETAILED DESCRIPTION

To make the objects, technical solutions, and advantages of the present application more apparent, embodiments of the present application are described hereinafter in detail in conjunction with the drawings. It is to be noted that if not in collision, the embodiments of the present application and features therein may be combined with each other in any manner.

The steps illustrated in the flowcharts among the drawings may be performed by, for example, a computer system capable of executing a set of computer-executable instructions. Moreover, though logical sequences are illustrated in the flowcharts, in some cases, the steps illustrated or described may be performed in sequences different from the sequences described herein.

Systems such as drones and smart cars have an increasing demand for the integration of communications and radar sensing systems. Radar sensing is used in wireless communication environments to retrieve the target by estimating the position, speed, and signature signals. ISAC technology can reduce the cost, dimension, and weight by sharing hardware and signal processing modules, especially for drone systems; the system benefits from sharing information with each other to improve performance.

Due to its large bandwidth and short wavelength, the terahertz frequency band provides an excellent operating frequency band for integrating communications and sensing into one module. Due to its large bandwidth, the terahertz frequency band provides potential high-data-rate transmission for communications, high resolution for radar operations, and low latency for information exchange and sharing between the communication module and the sensing module. For terahertz, antenna arrays and steerable beam antennas are needed to overcome the problem of large propagation attenuation and estimate the signal direction. ISAC still faces challenges in research. One of the challenges is that communication and sensing have different requirements for beam scanning. Sensing requires a time-varying directional scanning beam, while communication requires a stable and accurately directional beam to achieve a larger gain. Existing research mostly considers single-beam communications and sensing. The sensing direction in this case is limited to the communication node.

In the research of the currently emerging sixth-generation mobile networks (6G) technology, the smart metasurface (also called Reconfigurable Intelligence Surface (RIS) or Intelligent Reflecting Surface (IRS)) is one of the key research directions. The artificial surface structure formed by the subwavelength structure has field-programmability and spatiotemporal information modulation capabilities, can manipulate electromagnetic waves accurately and efficiently, and can be used for reshaping the wireless propagation environment. Based on the time-shifting property in the Fourier transform theory, the control signal of the smart metasurface is appropriately delayed so that a method for independently controlling the harmonic amplitude and phase can be performed. Based on the current design, the smart metasurface is often deployed outside the building to achieve the wireless relay when there are obstacles in communications, or the wireless communication transmitter of the smart metasurface is directly built. However, to ensure the mobility of communications, the smart metasurface may need to be deployed throughout the building during design, making practical applications difficult.

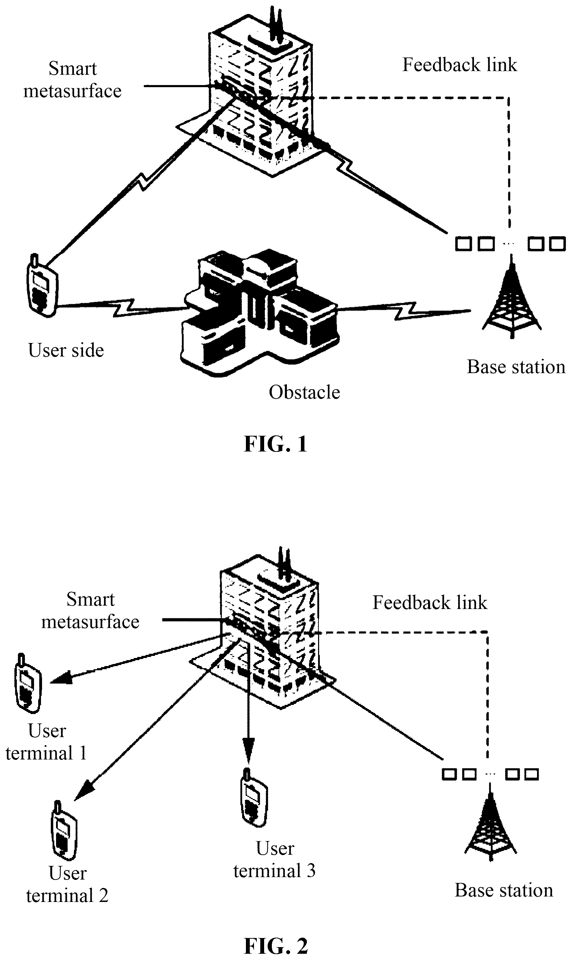

FIG. 1 is a schematic diagram of an application scenario of a smart metasurface in the related art. FIG. 2 is a schematic diagram of another application scenario of a smart metasurface in the related art. FIG. 1 shows a communication scenario of achieving the wireless relay based on the smart metasurface, and FIG. 2 shows a communication scenario of constructing a communication transmitter of the smart metasurface.

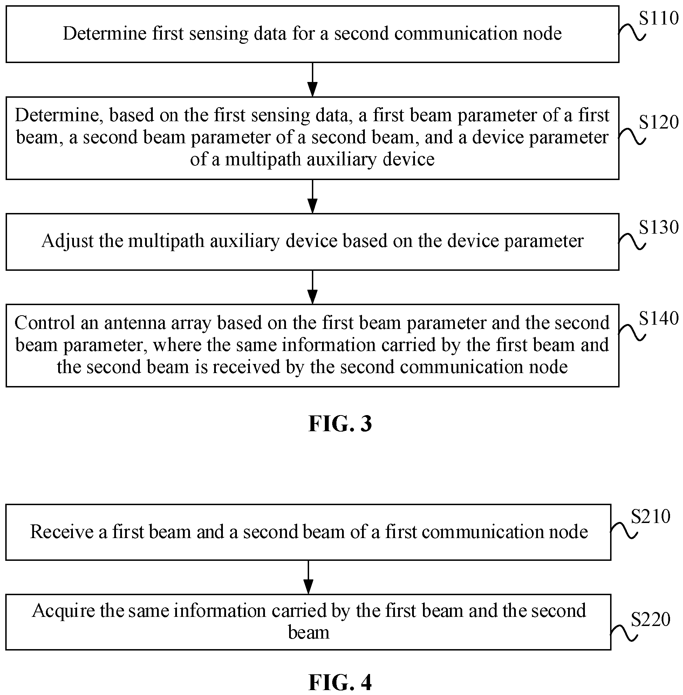

In an example embodiment, FIG. 3 is a flowchart of a beam control method according to an embodiment of the present application. The method is applied to the case where beam control is performed to improve communication performance. The method may be performed by a beam control apparatus. The apparatus may be implemented by software and/or hardware and integrated on a first communication node. The first communication node may be a base station.

As shown in FIG. 3, the beam control method includes the following operations.

In S110, first sensing data for a second communication node is determined.

ISAC, also known as the integration of communications and sensing, may be a new type of information processing technology that can realize the coordination of sensing and communication functions based on the sharing of software and hardware resources and can effectively improve the system spectrum efficiency, hardware efficiency, and information processing efficiency.

The first communication node may be considered as a communication node that improves the communication performance by controlling the beam.

The first communication node side may have a multi-beam structure to point the beams from different directions to the second communication node. The second communication node may be considered as a target terminal corresponding to the first communication node through multiple beams.

The first sensing data may be considered as the sensing data of the second communication node determined when the first communication node senses the second communication node. The sensing data may be considered to be determined based on the data obtained through sensing. The manner of determining the sensing data is not limited here. For example, the surroundings of the first communication node are sensed in a multi-beam manner. For example, the surroundings of the first communication node may be environmental information within a first set distance, that is, first environmental information. The first sensing data of the second communication node within the communication range of the first communication node may be determined based on the first environmental information. How to determine the first sensing data based on the first environmental information is not limited here.

In an embodiment, in this step, the information of target user equipment (UE), that is, the first sensing data, may be determined by scanning multiple beams. The basic task of sensing is to determine, based on the received signals, the first environmental information, such as the distance, direction, and speed of the environmental object and to extract information from these pieces of information to obtain the first sensing data. The UE information mainly includes the geographical position (such as the Global Positioning System (GPS) coordinates), the absolute movement speed range, the absolute movement speed ranges of the UE and other surrounding terminals, and the relative distance range between the UE and other potential terminals. The other potential terminals may be other terminals that will be located around the UE.

In the present disclosure, the surroundings may be considered to be within a set distance. The set distances corresponding to the surroundings of different objects are different. For example, the surroundings of the first communication node may be considered to be within the first set distance of the first communication node. The surroundings of the second communication node may be considered to be within the second set distance of the second communication node. The first communication distance and the second communication distance may be the same or different. The set distances of the same communication node in different communication environments may be the same or different.

In this embodiment, the first sensing data can be determined in real time so that the first beam and the second beam are continuously updated, and the communication with the mobile second communication node is possible.

In S120, a first beam parameter of a first beam, a second beam parameter of a second beam, and a device parameter of a multipath auxiliary device are determined based on the first sensing data.

The first beam and the second beam may be emitted by the first communication node. The first beam parameter may be the parameter of the first beam and may include at least one or more of the phase or amplitude. The second beam parameter may be the parameter of the second beam and may include at least one or more of the phase or amplitude. The multipath auxiliary device such as Reconfigurable Intelligence Surface (RIS) or Intelligent Reflecting Surface (IRS) may be considered as a device that assists multiple paths. For example, the multipath auxiliary device may be a device that assists in multipath transmission.

The multipath auxiliary device can change the directions of the beams so that the beams from different directions can be pointed to the second communication node.

The content of the multipath auxiliary device is not limited.

In an embodiment, the multipath auxiliary device may be the RIS or IRS. The RIS or IRS is deployed in the communication environment to manipulate the frequency, phase, polarization, and other characteristics of reflected or refracted electromagnetic waves to reshape wireless channels.

In an embodiment, the multipath auxiliary device may include a reflection panel and a control apparatus for controlling the angle or position of the reflection panel. The apparatus may be implemented by a mechanical structure or may be implemented in other manners. The reflection panel may be a panel made of a metal material or a panel made of another material having a reflective property greater than a set property threshold. The metal may be smooth, or the smoothness of the metal may be greater than a set threshold.

The device parameter may be considered to be the parameter of the multipath auxiliary device. The multipath auxiliary device may be adjusted based on the device parameter, thereby adjusting the reflective path such that the reflective path can be incident on the second communication node with the strongest power.

In the present application, one or more first beams may be provided, and one or more second beams may be provided. One or more multipath auxiliary devices may be provided, and one multipath auxiliary device may correspond to one or more second beams. One or more beams are transmitted toward the second communication node via the multipath auxiliary device.

In this step, the first beam parameter, the second beam parameter, and the device parameter are determined based on the first sensing data. The sequence in which the first beam parameter, the second beam parameter, and the device parameter are determined is not limited, and the first beam parameter, the second beam parameter, and the device parameter may be determined simultaneously or in any sequence.

In this step, based on the first sensing data, the first beam parameter, the second beam parameter, and the device parameter are determined in a reinforcement learning (RL) manner, for example, through a ray tracing simulation module. The first sensing data is loaded into the ray tracing simulation module so that the first beam parameter, the second beam parameter, and the device parameter are outputted. The ray tracing simulation modules for determining the first beam parameter, the second beam parameter, and the device parameter may be different modules, and the first beam parameter, the second beam parameter, and the device parameter each correspond to one ray tracing simulation module. The content of the ray tracing simulation module is not limited. The communication frequency and frequency point number information may be preloaded into the ray tracing simulation module, the propagation mechanism may be set to the first-order reflective path, and the optimal power and phase of the reflective path are optimized in the RL method such that the reflective path can be incident on the terminal with the strongest power and mapped to the coding library of the smart metasurface through the phase.

This step may be performed through neural network technology. For example, the trained model is inputted to determine the first beam parameter, the second beam parameter, and the device parameter.

In S130, the multipath auxiliary device is adjusted based on the device parameter.

After the device parameter is determined, in this step, the multipath auxiliary device may be adjusted based on the device parameter. The adjustment manner is not limited here. Different multipath auxiliary devices may correspond to different adjustment manners. For example, in the case where the multipath auxiliary device is the smart metasurface, the direction of the angle of emergence can be changed by adjusting the surface electromagnetic property of the smart metasurface. For another example, in the case where the multipath auxiliary device includes the reflection panel and the control apparatus which is also known as a mechanical apparatus, the angle of the reflection panel may be changed.

In S140, an antenna array is controlled based on the first beam parameter and the second beam parameter, where the same information carried by the first beam and the second beam is received by the second communication node.

The directivity of a single antenna is limited. To suit various applications, the antenna feed and control arrangements of two or more single antennas operating in the same frequency band are performed according to certain requirements to form an antenna array.

In this step, the antenna array of the first communication node may be controlled based on the first beam parameter and the second beam parameter so that the antenna array emits the first beam based on the first beam parameter and emits the second beam based on the second beam parameter.

The first communication node may transmit the same information through the first beam and the second beam, thereby improving the transmission performance of the first communication node and compensating for the loss of transmission performance caused by the loss phenomenon. The same information may be pieces of information that are the same. For example, pieces of information that are the same are sent through the first beam and the second beam, respectively.

In the present application, the sequence in which the multipath auxiliary device is adjusted and the antenna array is controlled is not limited. The multipath auxiliary device is adjusted while the antenna array is controlled. Alternatively, the antenna array may be controlled before the multipath auxiliary device is adjusted. It is also feasible that the multipath auxiliary device is adjusted before the antenna array is controlled.

The phase difference between the first beam and the second beam at the second communication node may be less than a set threshold, thereby achieving power enhancement.

In the beam control method provided in the embodiment of the present application, the first sensing data for the second communication node is determined by sensing, and the second communication node is determined so that based on the first sensing data, the first beam parameter for controlling the first beam, the second beam parameter for controlling the second beam, and the device parameter for controlling the multipath auxiliary device are determined. In this manner, the antenna array is adjusted based on the first beam parameter and the second beam parameter so that the antenna array emits the first beam conforming to the first beam parameter and the second beam conforming to the second beam parameter. The multipath auxiliary device is adjusted based on the device parameter so that the multipath auxiliary device can emit the required reflective path, thereby improving the transmission performance.

Based on the preceding embodiment, variant embodiments of the preceding embodiment are provided. It is to be noted here that for ease of description, only differences from the preceding embodiment are described in the variant embodiments.

In an embodiment, the first sensing data includes one or more of the following: position information of the second communication node, a movement speed, or first environmental information of a communication environment of the first communication node.

The position information may be information representing the position of the second communication node. The movement speed may be one or more of the absolute movement speed of the second communication node or the movement speed of the second communication node relative to the first communication node. The communication environment may be an environment during a communication process. The first environmental information may be used for representing the communication environment. The communication environment may include information about the scatterer. For example, the communication environment includes one or more of the position or movement speed of the scatterer.

In an embodiment, determining the first sensing data for the second communication node includes the following.

A sensing module of the first communication node determines the first sensing data for the second communication node using multi-beam scanning.

The sensing module may be implemented by software and/or hardware. The sensing module may be a module for implementing sensing. In this embodiment, the sensing module determines the first sensing data for the second communication node in a multi-beam scanning manner. The first sensing data can be used for determining the first beam parameter, the second beam parameter, and the device parameter. The first sensing data may be determined based on the data required to determine the first beam parameter, the second beam parameter, and the device parameter. The first beam parameter and the second beam parameter may be determined based on the device that emits the first beam and the second beam, and the device parameter may be determined by the multipath auxiliary device.

In an embodiment, determining, based on the first sensing data, the first beam parameter of the first beam, the second beam parameter of the second beam, and the device parameter of the multipath auxiliary device includes the following.

Based on position information of the second communication node included in the first sensing data, the first beam parameter of the first beam, the second beam parameter of the second beam, and the device parameter of the multipath auxiliary device are determined, where a beam direction of the first beam is associated with a direction of the second communication node relative to the first communication node, and the second beam is sent to the second communication node after a phase of the second beam is changed by the multipath auxiliary device.

The position information may be one or more of the absolute position information of the second communication node or the position information of the second communication node relative to the first communication node. In this embodiment, the first beam parameter, the second beam parameter, and the device parameter are determined based on the position information of the second communication node in the RL method.

The beam direction of the first beam is pointed to the second communication node, that is, associated with the direction of the second communication node relative to the first communication node. For example, the beam direction of the first beam is the same as the direction of the second communication node relative to the first communication node or has a deviation within a set range from the direction of the second communication node relative to the first communication node.

The second beam may be transmitted to the multipath auxiliary device, and then the second beam is sent to the second communication node after the phase of the second beam is changed by the multipath auxiliary device so that the beams transmitted to the second communication node include the first beam and the second beam, thereby improving the reception performance of the second communication node.

In an embodiment, adjusting the multipath auxiliary device based on the device parameter includes the following.

Based on an electromagnetic property indicated by the device parameter, a surface electromagnetic property of the multipath auxiliary device is adjusted, where the device parameter includes a time-shifted control signal, and the multipath auxiliary device includes a smart metasurface.

The device parameter may be parameters indicating the electromagnetic property. The electromagnetic properties may include electrical and magnetic properties.

**In** this embodiment, the surface electromagnetic property of the multipath auxiliary device may be adjusted based on the device parameter. For example, the electromagnetic property indicated by the device parameter may be used as the surface electromagnetic property of the multipath auxiliary device so that the adjusted surface electromagnetic property of the multipath auxiliary device is the electromagnetic property indicated by the device parameter.

**In** this embodiment, the electromagnetic property may be indicated by the time-shifted control signal. In this embodiment, the control signal of the smart metasurface may be delayed based on the time-shifting property in the Fourier transform theory so that the amplitude and phase can be independently controlled. In an embodiment, adjusting the multipath auxiliary device based on the device parameter includes the following.

Based on a position indicated by the device parameter, a mechanical apparatus of the multipath auxiliary device adjusts an angle of a reflection panel in the multipath auxiliary device.

**In** this embodiment, the angle of the reflection panel of the multipath auxiliary device may be adjusted to the position indicated by the device parameter so that the second beam can be transmitted to the second communication node from the reflection panel based on the adjusted angle, thereby ensuring the reliability of communications and the stability of the link.

**In** the case where the angle of the reflection panel is adjusted, the mechanical apparatus of the multipath auxiliary device may adjust the angle of the reflection panel. The mechanical apparatus may be connected to the reflection panel. For example, the mechanical apparatus is mechanically connected to the reflection panel. After the mechanical apparatus acquires the position indicated by the device parameter, the mechanical apparatus controls the angle of the reflection panel so that the communication system formed by the first communication node and the second communication node can receive the maximum power in the working mode.

The reflection panel may be a panel with reflective properties. For example, the reflection panel may be made of metal or other reflective materials.

In an embodiment, the beam control method further includes the following.

Second sensing data transmitted by the second communication node is acquired, where the second sensing data is determined through multi-beam scanning of the second communication node.

The second sensing data may be the sensing data of the second communication node acquired by the second communication node through sensing. The second sensing data may include the position information of the second communication node, the movement speed of the second communication node, and the first environmental information of a communication environment of the second communication node. The first sensing data may be determined by the first communication node. The second sensing data may be determined by the second communication node.

The antenna beam of the second communication node is used for continuously sensing the surrounding environment and is used for determining the second sensing data such as the relative distance range between the UE and the mobile scatterer in the surrounding environment and whether the potential obstruction exists during the communication process.

The second sensing data may be determined by the second communication node through multi-beam scanning. For example, the second sensing data is extracted from the multi-beam scanning result. The second sensing data may be set based on actual conditions, and no specific settings are made here.

In an embodiment, the beam control method further includes the following.

Node information of the second communication node is predicted based on the second sensing data, the first sensing data currently determined by the first communication node through multi-beam scanning, and last sensing data, where the node information includes a node position and a motion state, and the last sensing data includes one or more of the first sensing data determined by the first communication node last time through multi-beam scanning or the second sensing data acquired last time.

Based on the predicted node information, the first beam parameter of the first beam, the second beam parameter of the second beam, and the device parameter of the multipath auxiliary device are adjusted.

The multipath auxiliary device is adjusted based on the adjusted device parameter.

The antenna array is controlled based on the adjusted first beam parameter and the adjusted second beam parameter.

The last sensing data may be the sensing data determined last time, such as the first sensing data determined last time through multi-beam scanning and the second sensing data acquired last time.

The node information may be the information of the second communication node. The node position may be the position of the second communication node. The motion state may indicate whether the second communication node moves. In the case where the second communication node moves, the motion state may further include the absolute movement speed and/or relative movement speed of the second communication node. The relative movement speed may be the movement speed of the second communication node relative to the first communication node or the remaining communication nodes around the second communication node. The motion state may further include the motion direction of the second communication node, such as the absolute motion direction and/or relative motion direction. The relative motion direction may be the motion direction of the second communication node relative to the first communication node or the remaining communication nodes around the second communication node.

In the case where the node information of the second communication node is predicted based on the second sensing data, the current first sensing data, and the last sensing data, the RL method or the Kalman filtering algorithm may be used.

"Current" may be the current prediction occasion. In this embodiment, the movement of the second communication node may be predicted so that the antenna array and the multipath auxiliary device are controlled based on the prediction result.

In this embodiment, according to the acquired information such as the movement speed and motion direction of the second communication node, the beam of the second communication node is adjusted such that the direction of the beam of the second communication node varies with the receiving end. The first communication node receives feedback from the second communication node and optimizes and adjusts the antenna beam of the first communication node such that the antenna beam of the first communication node is aligned with the antenna beam of the second communication node.

In an embodiment, the phase difference between the first beam and the second beam at the second communication node is less than a set threshold.

The phase difference is less than the set threshold so that each of the first beam and the second beam at the second communication node is at the peak or the trough, or the deviation between the peak of the first beam and the peak of the second beam is less than a pre-set deviation, or the deviation between the trough of the first beam and the trough of the second beam is less than a pre-set deviation.

In an example embodiment, FIG. 4 is a flowchart of an information acquisition method according to an embodiment of the present application. The method is applied to the case where information is received based on the regulated beam. The method may be performed by an information acquisition apparatus. The apparatus may be implemented by software and/or hardware and integrated on the second communication node. The second communication node may be a terminal device.

As shown in FIG. 4, the information acquisition method according to the present application includes the following operations.

In S210, a first beam and a second beam of a first communication node are received.

A beam parameter of the first beam and a beam parameter of the second beam are determined based on first sensing data of the first communication node, and the second beam is sent to the second communication node after passing through a multipath auxiliary device of the first communication node.

The first beam and the second beam may be controlled in the beam control method provided in the embodiment of the present application.

In S220, the same information carried by the first beam and the second beam is acquired.

After the first beam and the second beam are received, the same information carried by the first beam and the second beam may be acquired. Here, subsequent processing after the same information is acquired is not limited, and the remaining contents of the first beam and the second beam are not limited.

The present application provides an information acquisition method. In this embodiment, the same information is acquired from the first beam and the second beam, and the first beam and the second beam have different beam directions. The first beam may be transmitted by the first communication node and pointed to the second communication node, and the second beam may be transmitted by the first communication node and then, through the multipath auxiliary device, transmitted toward the second communication node. Since the same information can be carried by multiple beams, the reception performance of communications is improved.

Based on the preceding embodiment, variant embodiments of the preceding embodiment are provided. It is to be noted here that for ease of description, only differences from the preceding embodiment are described in the variant embodiments.

In an embodiment, the information acquisition method further includes the following.

Second sensing data is determined using multi-beam scanning, where the second sensing data includes one or more of second environmental information of a communication environment of the second communication node, position information of the second communication node, or the movement speed of the second communication node.

The second environmental information may include the relative distance range of scatterers around the second communication node and information indicating whether the potential obstruction exists during the communication process of the second communication node.

The scanning and determination manners are not limited here.

In an embodiment, the information acquisition method further includes the following.

The second sensing data is transmitted to the first communication node.

The second sensing data is transmitted to the first communication node so that the first communication node controls the first beam and the second beam, thereby improving the reception performance.

In an embodiment, the first sensing data includes one or more of the following: position information of the second communication node, the movement speed, or first environmental information of a communication environment of the first communication node.

In an embodiment, the first sensing data is determined by the sensing module of the first communication node using multi-beam scanning.

In an embodiment, based on position information of the second communication node included in the first sensing data, the first beam parameter of the first beam, the second beam parameter of the second beam, and the device parameter of the multipath auxiliary device are determined, where a beam direction of the first beam is associated with a direction of the second communication node relative to the first communication node, and the second beam is sent to the second communication node after a phase of the second beam is changed by the multipath auxiliary device.

In an embodiment, the phase difference between the first beam and the second beam at the second communication node is less than a set threshold.

The present application is described exemplarily below. The beam control method and the information acquisition method provided in the present application may be considered as a method for controlling the received power by using ISAC and the smart metasurface. The embodiments of the present application relate to a received power control method for a terahertz mobile communication system, which mainly uses deep learning to control the phase of the smart metasurface. The received power control method for a terahertz mobile communication system is a method for tracking the motion states of the target terminal and the surrounding mobile scatterer using ISAC, and belongs to the field of point-to-point communication transmission technology of the base station configured with the antenna array.

The technical solution flow of the point-to-point communication process in the present application is as follows.

In the first stage, the prior information such as the position, movement speed, and communication environment of the terminal is acquired using the sensing module.

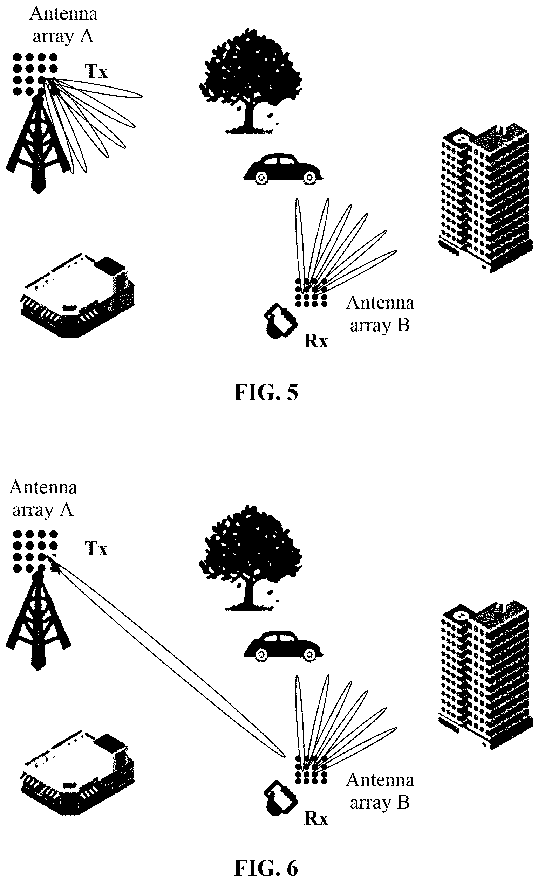

FIG. 5 is a schematic diagram illustrating a scenario of acquiring prior information according to an embodiment of the present application. Referring to FIG. 5, the antenna array A equipped at the transmitting end supports communications and sensing in the communication direction; in addition to communications, the antenna array B equipped at the receiver also supports scanning beams for sensing the environment to determine the position and speed of the nearby mobile scatterer. The sensing waveform of the antenna array A at the transmitting end is shaped in the baseband, is sent after the sensing waveform is modulated to the carrier through high-frequency modulation at the radio frequency terminal. The sensing signal processing mechanism is to acquire the related distance of the target terminal, the prior information of the communication environment, and the Doppler parameter and track the movement trajectory of the target terminal. The antenna array B uses scanning beams to update the movement speed of the mobile scatterer in the surrounding environment and pre-determine whether the obstruction exists in front. The related distance of the target terminal may be the distance related to the target terminal, including position information of the target terminal and position information of a scatterer within a set distance from the target terminal.

In the second stage, based on the sensing data, the single beam of the antenna array at the transmitting end pointed to the target terminal, and the multiple beams of the receiving end still sense the information of the surrounding environment.

In terahertz communication technology, the antenna array is used to enhance the signal strength at the receiving end to overcome the signal loss and attenuation problems. The sensing information in the previous stage, that is, the sensing data, is used to assist the beam alignment and beam tracking processes of the transmitting end and the target terminal. The position relationship of the target terminal may be obtained from the sensing information. Based on the information such as the movement speed and trajectory of the terminal included in the sensing information, the minimized beam search space can be obtained, thereby effectively reducing the beam alignment time.

FIG. 6 is a schematic diagram of a beam alignment scenario according to an embodiment of the present application. Referring to FIG. 6, a single beam at the transmitting end is aligned with the target terminal. Multiple beams at the receiving end sense the information of the surrounding environment. The information of the surrounding environment may be considered to be the environmental information within a set range of the second communication node. The environmental information includes information related to the scatterer, such as one or more of the position, speed, or trajectory of the scatterer.

In the third stage, power enhancement assisted by the smart metasurface is achieved in the RL method.

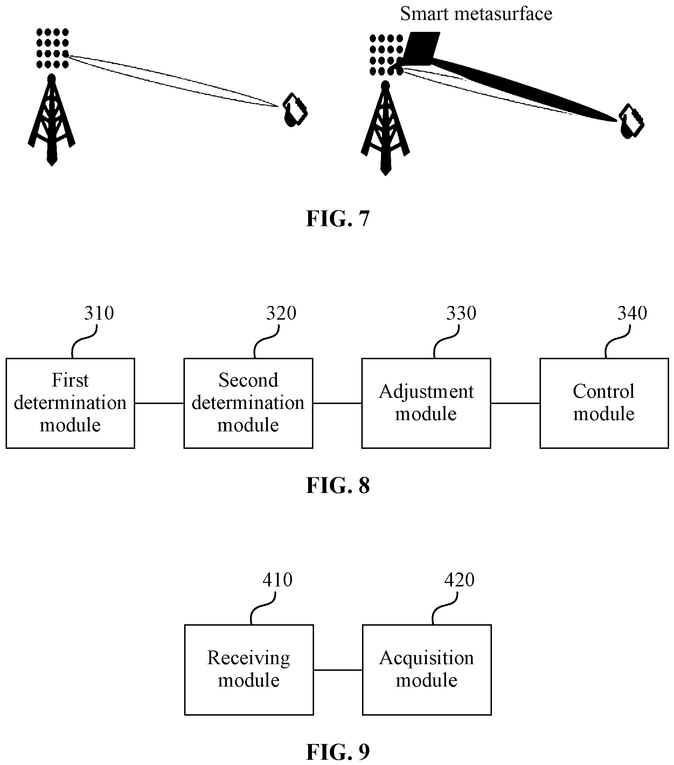

The control signal of the smart metasurface is delayed based on the time-shifting property in the Fourier transform theory so that the amplitude and phase can be independently controlled. FIG. 7 is a schematic diagram of a scenario of enhancing received power by designing an electromagnetic environment using a smart metasurface according to an embodiment of the present application. As shown in FIG. 7, the smart metasurface function is activated after the beam alignment direction is obtained. Using the RL method, in the RL training, the agent is the phase of the smart metasurface controlled by the RL algorithm, and the state is iteratively updated using ray tracing simulation. In the state, the phase of the reflected wave on the metasurface being in phase with the line-of-sight phase, the received power, and other pieces of information are used as rewards. In the case where beam alignment is achieved in the target scenario, an additional gain is obtained from an intelligent reflective surface, thereby ensuring the reliability of terminal communications and the stability of the link.

In the present application, the base station and the receiving terminal are equipped with the antenna arrays, and the motion states of the receiving end and the surrounding mobile scatterers are effectively tracked in the single-beam-multi-beam joint design method of the transmitting end and the receiving end. The single beam at the transmitting end is used for tracking the motion state and movement trajectory of the receiving end. The receiving end uses multiple beams to track the motion states of the mobile scatterers in the environment. An additional intelligent reflective surface is configured at the transmitting end, and RL is used to control the phase of the intelligent reflective surface, effectively utilizing the characteristics of multipath constructive superposition and having good robustness to channel fading variations.

Terahertz wireless communication causes large path loss due to a high frequency and a short wavelength; due to factors such as the current radio frequency system chip design, the transmit power is limited, resulting in low received power in the line-of-sight propagation environment and limited effective communication link length. From the perspective of radio wave propagation, electromagnetic waves in the terahertz frequency band have a poor diffraction capability and an extremely high transmission loss, and the surrounding mobile scatterers cause energy scattering. The single-beam-multi-beam joint ISAC solution is used to improve the accuracy of environmental sensing. By integrating the intelligent reflective surface technology, the phase of the reflected wave is intelligently controlled in the RL method so that the reflected wave passing through the smart metasurface is superimposed in phase with the dominant direct path, thereby enhancing the received signal power and improving the signal-to-noise ratio. The designed intelligent reflective surface is deployed at the transmitting end rather than on the wall of the building, which is more feasible. The smart metasurface has the advantages of low energy consumption and small size, and the smart metasurface in conjunction with ISAC has great development potential.

To make the objects, technical solutions, and advantages of the present application more apparent, the present application is further described hereinafter in detail in conjunction with the embodiments.

Beamforming has great potential in joint communications and radar sensing and is becoming one of the functional requirements on many emerging platforms, such as drones and smart cars. Although fundamental and extensive studies of the beamforming have been performed in communications and radar sensing, the application of the beamforming in joint systems is not simple. The present application first proposes to use a novel multi-beam structure and a steerable antenna array to achieve the integration of communications and sensing. Fixed sub-beams for communications are provided from a single transmit array and a single receive array, while multi-beam scanning is controlled to sense the surrounding environment. Finally, the reflective path is designed in the fast ray tracing method such that the reflective path can be phase-superimposed with the direct path, thereby achieving power enhancement.

### Embodiment one

In step 1, the sensing module is used to acquire the prior information such as the position, movement speed, and communication environment of the terminal, that is, to determine the first sensing data for the second communication node.

For example, in the case where the number of receivers within the cell coverage is greater than one, if the transmission resources are used in a random manner, when the transmission density of the transmitting end is high, it is difficult to avoid collisions between different transmission resources. At the same time, in-band interference has a negative impact on end-to-end communications and other communications in the same cell, such as vehicle-to-everything (V2X). To solve the preceding problems, the impact of collisions and in-band interference needs to be reduced. To achieve this purpose, information of the target UE is determined through multi-beam scanning. The basic task of sensing is to determine the distance, direction, and speed of the environmental object based on the received signals and to extract information from these pieces of information. Here, the UE information mainly includes the geographical position (such as the GPS coordinates), the absolute movement speed range, the absolute movement speed ranges of the UE and other surrounding terminals, and the relative distance range between the UE and other potential terminals.

In step 2, based on the sensing data, the single beam of the antenna array at the transmitting end is pointed to the target terminal device (that is, the single beam is pointed to the target terminal through the first beam), and multiple beams at the receiving end still sense the information of the surrounding environment (that is, the second sensing data transmitted by the second communication node is acquired, and the second sensing data is determined through multi-beam scanning of the second communication node).

For example, the transmitter receives feedback from the UE and optimizes and adjusts the antenna beam at the transmitter A (that is, based on the predicted node information, the first beam parameter of the first beam, the second beam parameter of the second beam, and the device parameter of the multipath auxiliary device are adjusted; the multipath auxiliary device is adjusted based on the adjusted device parameter; and the antenna array is controlled based on the adjusted first beam parameter and the adjusted second beam parameter) so that the antenna beam at the transmitter A is aligned with the antenna beam at the receiving UE. The beamforming direction vectors Wt and Wr at the transceiving end need to be fixed during at least one packet transmission, thereby ensuring that the information is transmitted in a stable channel. According to the information such as the movement speed of the UE acquired in step 1, the direction of the beam of the array A at the transmitting end changes along with the receiving end. Multiple beams at the UE end can simultaneously satisfy the communication and sensing requirements of different beam widths and power levels and can effectively add the communication sub-beam to the sensing sub-beam, thereby improving the signal-to-noise ratio on the communication link. In addition, the antenna beam at the receiver B is used for continuously sensing the surrounding environment and is used for determining the relative distance range between the UE and the mobile scatterer in the surrounding environment and whether the potential obstruction exists during the communication process. The receiving end B, that is, the second communication node, may feed back the data obtained through sensing, such as the second sensing data, to the transmitter A so that the transmitter A can adjust the antenna beam.

In step 3, multipath phase design and power enhancement are achieved through ray tracing simulation, that is, the device parameter of the multipath auxiliary device is determined based on the first sensing data, and the multipath auxiliary device is adjusted based on the device parameter.

For example, since the transmit power of the terahertz radio frequency device is currently limited, in the case where various losses in the communication system cannot be reduced, multipath superposition with the same frequency, the same vibration direction, and a constant initial phase is considered to satisfy the coherent superposition condition. The received power can be quickly estimated using ray tracing simulation according to the surrounding environment and the position of the receiving end UE; the auxiliary device at a transmitting port is automatically fine-tuned according to the ray tracing simulation result, thereby designing the propagation direction and phase of the multipath and achieving power enhancement.

In embodiment two, in step 1, the sensing module of the transmitter is used to obtain the position of the UE and achieve beam alignment for UE. For example, when the UE enters the coverage of the transmitting end, the UE automatically detects the network and is automatically connected to the base station. The sensing module of the transmitter mainly locates the user based on the field strength and determines the position of the user based on the change in the signal attenuation caused by the distance between the mobile user and the base station. The sensing module also uses signal angle-of-arrival positioning technology, and the antenna arrays are mounted on the transmitter. Through the mounted antenna arrays, the angle information of the UE relative to the base station is obtained, and rays are drawn outward from the base station. The points of intersection of the rays determine the geographic coordinates of the user, and the sensing module acquires the position of the UE. The sensing module predicts the geographical position and motion state of the user at the current occasion based on the geographical position and motion state of the user at the previous moment. The sensing module uses a radio frequency module of the terminal to perform beam adjustments based on the UE behavior to ensure the stability of the connection between the base station and the UE. According to the beam scanning and positioning technology of the sensing module, the transmitting end finds the rough beam range for the transceiving end to establish a connection. The terminal device then keeps the direction of the received beam unchanged, and the radio frequency module at the transmitting end transmits multiple narrow beams within the rough range of the previous step for more accurate directions of scanning. Next, the transmitting radio frequency band keeps the narrow beam direction of the previous step unchanged, and the terminal device UE performs beam scanning to find the best receiving angle.

In embodiment three, in step 2, based on the sensing data, the single beam of the antenna array at the transmitting end is pointed to the target terminal device, and the multiple beams of the receiving end still sense the information of the surrounding environment.

For example, for the UE in a mobile state, the base station needs to reperform beamforming and beam management, and recalculate beam parameters according to the position changes of the user, greatly increasing the calculation cost and update cost. Therefore, after the single beam at the transmitting end is pointed to the UE using beam tracking technology, the position of the user is predicted, and then the position of the user in the next state is predicted so that while the position of the user is changing, the beam parameter can be updated, and the shape and direction of the beam are changed. The prediction method may use the Kalman filtering algorithm. However, if the motion state of the measured target changes suddenly, the Kalman filtering algorithm is no longer applicable. Therefore, in addition to the fixed sub-beams for communications, the antenna array of the user terminal uses multiple beams to sense the information of the surrounding environment so that the real movement scenario of the mobile user can be restored as much as possible, and the motion state and geographical position of the mobile UE of the user can be more accurately estimated. Compared with the Kalman filtering method, multiple beams at the receiving end are used to sense the surrounding environment so that the gap between the prediction process and the real scenario can be reduced. In addition, the beam scanning at the receiving end can sense in real time whether an obstacle that blocks the line-of-sight transmission signal appears suddenly in the surroundings. If a mobile scatterer that blocks line-of-sight propagation appears, the direction in which the received power is the strongest can still be found based on the result of the beam for the surrounding environment, and the beam used for communication at the transmitting end is pointed to the mobile terminal again.

In embodiment four, the auxiliary device located at the transmitting port and used for designing the multipath may be the smart metasurface.

For example, based on the time-shifting property in the Fourier transform theory, the control signal of the smart metasurface is appropriately time-shifted so that a method for independently controlling the phase can be implemented, and the reflected electromagnetic wave can be independently controlled in a specific harmonic direction and with a specific intensity. Different spatial coding sequences may form different electromagnetic wavefronts, that is, spatial beams. The spatial coding sequences are ultimately determined by fast ray tracing simulation and the RL method. In the end-to-end case where no obstruction exists, communication mainly relies on the direct path and is assisted by the reflective path on the smart metasurface. In the case where the obstruction exists, communication relies on the transmission path of the smart metasurface. Therefore, the three-dimensional scenario model in the surrounding environment does not need to be preloaded into the computing unit. Only the absolute coordinates of the transmitting end, the absolute coordinate information of the position uploaded by the UE, and the dynamic speed range are needed to estimate the next frame snapshot.

In 4.1, for a terminal without any obstruction, if the distance between the UE and the transmitter does not exceed *d*, the ray tracing simulation module does not need to be started, and communication can be performed directly using the direct path. If the distance between the UE and the transmitter exceeds d but does not exceed *e* (*e* > *d*), the UE is still within the coverage of the cell, and the ray tracing simulation module is started. The bandwidth, communication frequency, and frequency point number information are preloaded into the ray tracing simulation module, and the propagation mechanism is set to direct radiation and first-order reflection. The optimal phase of the reflective path is optimized and iterated in the RL method so that the phases of the reflective path and the direct path are in the same direction, thereby achieving phase constructive superposition. The phase obtained by simulation is mapped to the coding library of the smart metasurface, and the function of using the smart metasurface to assist in communications is implemented in real scenarios of communications, thereby effectively increasing the communication distance.

In 4.2, for a terminal with the obstruction in front, the ray tracing simulation module is directly started. The communication frequency and frequency point number information is preloaded into the ray tracing simulation module, the propagation mechanism may be set to the first-order reflective path, and the optimal power and phase of the reflective path are optimized in the RL method such that the reflective path can be incident on the terminal with the strongest power and mapped to the coding library of the smart metasurface through phase.

In 4.3, whether the obstruction still exists in the next snapshot is estimated through simulation according to the movement speeds of the UE and the obstacle, then the setting parameters of the ray tracing simulation module are switched, and step 4.2 or 4.3 is repeated.

In embodiment five, the auxiliary device located at the transmitting port and used for designing the multipath may be the smooth metal controlled by the mechanical apparatus (the case where the reflection panel is the metal is used as an example in this embodiment).

For example, a smooth metal sheet with total reflection and a mechanical control apparatus for controlling the position of the metal sheet are added to the antenna apparatus at the transmitting end. A position characteristic parameter is extracted from the uploaded UE position information and inputted into the ray tracing simulation module. According to the UE position, the metal sheet position is traversed in the ray tracing simulation to obtain the metal sheet position corresponding to the maximum received power. The relatively high computational complexity of the ray tracing simulation is mainly caused by the calculation of high-order reflective paths in the three-dimensional scenario. However, this embodiment may focus on only the direct path and the artificially designed first-order reflective path, so the computational complexity is relatively low. The ray tracing simulation module outputs the metal sheet position corresponding to the maximum received power to a mechanical control module, and the mechanical control module mechanically adjusts the metal sheet position according to the simulation result so that the communication system can receive the maximum power in the operating mode, thereby satisfying the requirements of the received power thresholds in longer communication links in different scenarios. The reflective path generated by the metal sheet can effectively increase the received power by more than 3 dB. The apparatus is simple and low-cost.

In an example embodiment, the present application provides a beam control apparatus. FIG. 8 is a structural diagram of a beam control apparatus according to an embodiment of the present application. The apparatus may be integrated on a first communication node. As shown in FIG. 8, the apparatus includes a first determination module 310, a second determination module 320, an adjustment module 330, and a control module 340.

The first determination module 310 is configured to determine first sensing data for a second communication node.

The second determination module 320 is configured to determine, based on the first sensing data, a first beam parameter of a first beam, a second beam parameter of a second beam, and a device parameter of a multipath auxiliary device.

The adjustment module 330 is configured to adjust the multipath auxiliary device based on the device parameter.

The control module 340 is configured to control an antenna array based on the first beam parameter and the second beam parameter, where the same information carried by the first beam and the second beam is received by the second communication node.

The beam control apparatus provided in this embodiment is configured to perform the beam control method of the embodiments of the present application. The beam control apparatus provided in this embodiment has implementation principles and technical effects similar to those of the beam control method of the embodiments of the present application, and the details are not repeated here.

Based on the preceding embodiment, variant embodiments of the preceding embodiment are provided. It is to be noted here that for ease of description, only differences from the preceding embodiment are described in the variant embodiments.

In an embodiment, the first sensing data includes one or more of the following: position information of the second communication node, the movement speed, or first environmental information of a communication environment of the first communication node.

In an embodiment, the first determination module 310 is configured to perform the following.

A sensing module of the first communication node determines the first sensing data for the second communication node using multi-beam scanning.

In an embodiment, the second determination module 320 is configured to perform the following.

Based on position information of the second communication node included in the first sensing data, the first beam parameter of the first beam, the second beam parameter of the second beam, and the device parameter of the multipath auxiliary device are determined, where a beam direction of the first beam is associated with a direction of the second communication node relative to the first communication node, and the second beam is sent to the second communication node after a phase of the second beam is changed by the multipath auxiliary device.

In an embodiment, the adjustment module 330 is configured to perform the following.

Based on an electromagnetic property indicated by the device parameter, a surface electromagnetic property of the multipath auxiliary device is adjusted, where the device parameter includes a time-shifted control signal, and the multipath auxiliary device includes a smart metasurface.

In an embodiment, the adjustment module 330 is configured to perform the following.

Based on a position indicated by the device parameter, a mechanical apparatus of the multipath auxiliary device adjusts an angle of a reflection panel in the multipath auxiliary device.

In an embodiment, the apparatus further includes an acquisition module.

The acquisition module is configured to acquire second sensing data transmitted by the second communication node, where the second sensing data is determined through multi-beam scanning of the second communication node.

In an embodiment, the apparatus further includes a prediction module.

The prediction module is configured to predict node information of the second communication node based on the second sensing data, the first sensing data currently determined by the first communication node through multi-beam scanning, and last sensing data, where the node information includes a node position and a motion state, and the last sensing data includes one or more of the first sensing data determined by the first communication node last time through multi-beam scanning or the second sensing data acquired last time.

Based on the predicted node information, the first beam parameter of the first beam, the second beam parameter of the second beam, and the device parameter of the multipath auxiliary device are adjusted.

The multipath auxiliary device is adjusted based on the adjusted device parameter.

The antenna array is controlled based on the adjusted first beam parameter and the adjusted second beam parameter.

In an embodiment, the phase difference between the first beam and the second beam at the second communication node is less than a set threshold.

In an example embodiment, the present application provides an information acquisition apparatus. The apparatus may be integrated on a second communication node. FIG. 9 is a structural diagram of an information acquisition apparatus according to an embodiment of the present application. As shown in FIG. 9, the information acquisition apparatus includes a receiving module 410 and an acquisition module 420.

The receiving module 410 is configured to receive a first beam and a second beam of a first communication node, where a beam parameter of the first beam and a beam parameter of the second beam are determined based on first sensing data of the first communication node, and the second beam is sent to the second communication node after passing through a multipath auxiliary device of the first communication node.

The acquisition module 420 is configured to acquire the same information carried by the first beam and the second beam.

The information acquisition apparatus provided in this embodiment is configured to perform the information acquisition method of the embodiments of the present application. The information acquisition apparatus provided in this embodiment has implementation principles and technical effects similar to those of the information acquisition method of the embodiments of the present application, and the details are not repeated here.

Based on the preceding embodiment, variant embodiments of the preceding embodiment are provided. It is to be noted here that for ease of description, only differences from the preceding embodiment are described in the variant embodiments.

In an embodiment, the apparatus further includes a determination module.

The determination module is configured to determine second sensing data using multi-beam scanning, where the second sensing data includes one or more of second environmental information of a communication environment of the second communication node, position information of the second communication node, or the movement speed of the second communication node.

In an embodiment, the apparatus further includes a transmission module.

The transmission module is configured to transmit the second sensing data to the first communication node.

In an embodiment, the first sensing data includes one or more of the following: position information of the second communication node, the movement speed, or first environmental information of a communication environment of the first communication node.

In an embodiment, the first sensing data is determined by the sensing module of the first communication node using multi-beam scanning.

In an embodiment, based on position information of the second communication node included in the first sensing data, the first beam parameter of the first beam, the second beam parameter of the second beam, and the device parameter of the multipath auxiliary device are determined, where a beam direction of the first beam is associated with a direction of the second communication node relative to the first communication node, and the second beam is sent to the second communication node after a phase of the second beam is changed by the multipath auxiliary device.

In an embodiment, the phase difference between the first beam and the second beam at the second communication node is less than a set threshold.

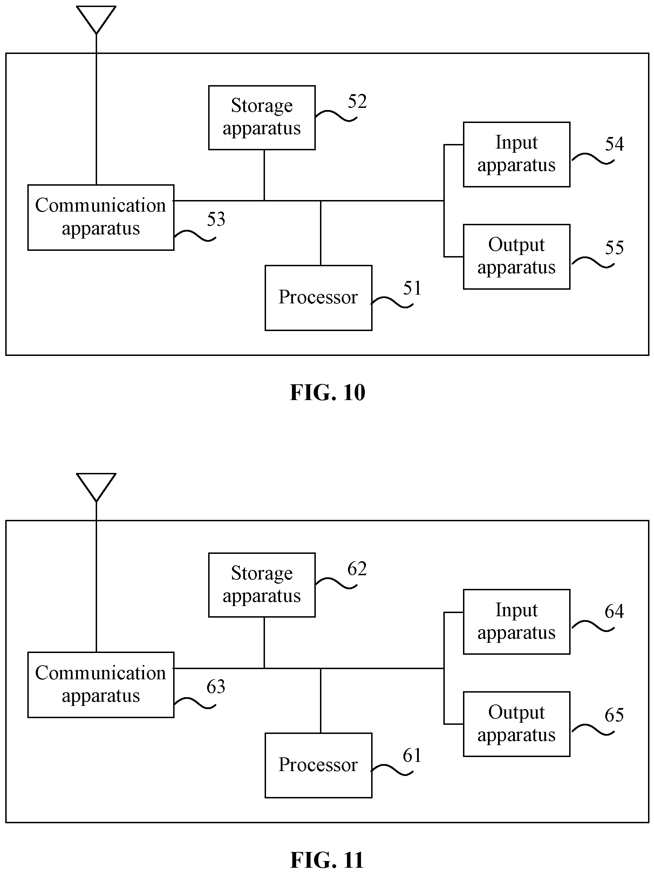

In an embodiment, the embodiment of the present application provides a first communication node. FIG. 10 is a structural diagram of a first communication node according to an embodiment of the present application. As shown in FIG. 10, the first communication node provided in the present application includes one or more processors 51 and a storage apparatus 52. One or more processors 51 may be provided in the first communication node. In FIG. 10, one processor 51 is used as an example. The storage apparatus 52 is configured to store one or more programs. When executed by the one or more processors 51, the one or more programs cause the one or more processors 51 to perform the beam control method according to the embodiments of the present application.

The first communication node further includes a communication apparatus 53, an input apparatus 54, and an output apparatus 55.

The processor 51, the storage apparatus 52, the communication apparatus 53, the input apparatus 54, and the output apparatus 55 in the first communication node may be connected via a bus or in other manners, with connection via a bus as an example in FIG. 10.

The input apparatus 54 may be configured to receive inputted digital or character information and generate the key signal input related to user settings and function control of the first communication node. The output apparatus 55 may include a display device such as a display screen.

The communication apparatus 53 may include a receiver and a sender. The communication apparatus 53 is configured to perform information transceiving communication under the control of the processor 51.

As a computer-readable storage medium, the storage apparatus 52 may be configured to store software programs, computer-executable programs, and modules, such as program instructions/modules (for example, the first determination module 310, the second determination module 320, the adjustment module 330, and the control module 340 in the beam control apparatus) corresponding to the beam control method described in the embodiments of the present application. The storage apparatus 52 may include a program storage region and a data storage region. The program storage region may store an operating system and an application program required by at least one function. The data storage region may store data created according to the use of the device. Additionally, the storage apparatus 52 may include a high-speed random-access memory and may further include a nonvolatile memory, such as at least one magnetic disk memory, a flash memory, or another nonvolatile solid-state memory. In some examples, the storage apparatus 52 may further include memories which are remotely disposed relative to the processor 51. These remote memories may be connected to the first communication node via a network. Examples of the preceding network include, but are not limited to, the Internet, an intranet, a local area network, a mobile communication network, and a combination thereof.

In an embodiment, the multipath auxiliary device in the first communication node includes a mechanical apparatus and a reflection panel. The mechanical apparatus is connected to the reflection panel and is used for controlling the angle of the reflection panel.

The reflection panel is a panel with reflective properties. For example, the reflection panel may be a panel made of metal or other materials with reflective properties. The shape of the reflection panel is not limited.

In an embodiment, the multipath auxiliary device in the first communication node includes a smart metasurface.

The multipath auxiliary device may be set within a set distance from the antenna array, and the setting position is not limited. For example, the multipath auxiliary device may be set on a bracket of a base station.

In an example embodiment, the present application provides a second communication node. FIG. 11 is a structural diagram of a second communication node according to an embodiment of the present application. As shown in FIG. 11, the second communication node provided in the present application includes one or more processors 61 and a storage apparatus 62. One or more processors 61 may be provided in the second communication node. In FIG. 11, one processor 61 is used as an example. The storage apparatus 62 is configured to store one or more programs. When executed by the one or more processors 61, the one or more programs cause the one or more processors 61 to perform the information acquisition method according to embodiments of the present application.

The second communication node further includes a communication apparatus 63, an input apparatus 64, and an output apparatus 65.

The processor 61, the storage apparatus 62, the communication apparatus 63, the input apparatus 64, and the output apparatus 65 in the second communication node may be connected via a bus or in other manners, with connection via a bus as an example in FIG. 11.

The input apparatus 64 may be configured to receive inputted digital or character information and generate the key signal input related to user settings and function control of the second communication node. The output apparatus 65 may include a display device such as a display screen.

The communication apparatus 63 may include a receiver and a sender. The communication apparatus 63 is configured to perform information transceiving communication under the control of the processor 61.

As a computer-readable storage medium, the storage apparatus 62 may be configured to store software programs, computer-executable programs, and modules, such as program instructions/modules (for example, the receiving module 410 and the acquisition module 420 in the information acquisition apparatus) corresponding to the information acquisition method described in the embodiments of the present application. The storage apparatus 62 may include a program storage region and a data storage region. The program storage region may store an operating system and an application program required by at least one function. The data storage region may store data created according to the use of the second communication node. Additionally, the storage apparatus 62 may include a high-speed random-access memory and may further include a nonvolatile memory, such as at least one magnetic disk memory, a flash memory, or another nonvolatile solid-state memory. In some examples, the storage apparatus 62 may further include memories which are remotely disposed relative to the processor 61. These remote memories may be connected to the second communication node via a network. Examples of the preceding network include, but are not limited to, the Internet, an intranet, a local area network, a mobile communication network, and a combination thereof.

An embodiment of the present application further provides a storage medium storing a computer program which, when executed by a processor, causes the processor to perform any method of the present application. The storage medium stores the computer program which, when executed by the processor, causes the processor to perform the beam control method and the information acquisition method according to the embodiments of the present application. The beam control method includes the following. First sensing data for a second communication node is determined.

Based on the first sensing data, a first beam parameter of a first beam, a second beam parameter of a second beam, and a device parameter of a multipath auxiliary device are determined.

The multipath auxiliary device is adjusted based on the device parameter.

An antenna array is controlled based on the first beam parameter and the second beam parameter, where the same information carried by the first beam and the second beam is received by the second communication node.

The information acquisition method includes the following. A first beam and a second beam of a first communication node are received, where a beam parameter of the first beam and a beam parameter of the second beam are determined based on first sensing data of the first communication node, and the second beam is sent to the second communication node after passing through a multipath auxiliary device of the first communication node.

The same information carried by the first beam and the second beam is acquired.

A computer storage medium in an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Examples (a non-exhaustive list) of the computer-readable storage medium include: an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage device, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable media may be transmitted by any suitable medium including, but not limited to, a wireless medium, a wire, an optical cable, a radio frequency (RF), or any suitable combination thereof.

Computer program codes for performing the operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any type of network including a local area network (LAN) or a wide area network (WAN) or may be connected to an external computer (for example, via the Internet through an Internet service provider).

The preceding are example embodiments of the present application and are not intended to limit the scope of the present application.

It is to be understood by those skilled in the art that the term terminal device encompasses any appropriate type of radio user device such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A beam control method, the method being applied by a first communication node and comprising:
acquiring first sensing data for a second communication node;
determining, based on the first sensing data, a first beam parameter of a first beam, a second beam parameter of a second beam, and a device parameter of a multipath auxiliary device;
adjusting the multipath auxiliary device based on the device parameter; and
controlling an antenna array based on the first beam parameter and the second beam parameter, wherein same information carried by the first beam and the second beam is received by the second communication node.

2. The method of claim 1, wherein the first sensing data comprises one or more of the following:
position information of the second communication node, a movement speed, or first environmental information of a communication environment of the first communication node.

3. The method of claim 1, wherein acquiring the first sensing data for the second communication node comprises:
determining, by a sensing module of the first communication node, the first sensing data for the second communication node using multi-beam scanning.

4. The method of claim 1, wherein determining, based on the first sensing data, the first beam parameter of the first beam, the second beam parameter of the second beam, and the device parameter of the multipath auxiliary device comprises:
based on position information of the second communication node comprised in the first sensing data, determining the first beam parameter of the first beam, the second beam parameter of the second beam, and the device parameter of the multipath auxiliary device, wherein a beam direction of the first beam is associated with a direction of the second communication node relative to the first communication node, and the second beam is sent to the second communication node after a phase of the second beam is changed by the multipath auxiliary device.

5. The method of claim 1, wherein adjusting the multipath auxiliary device based on the device parameter comprises:
adjusting a surface electromagnetic property of the multipath auxiliary device based on an electromagnetic property indicated by the device parameter, wherein the device parameter comprises a time-shifted control signal, and the multipath auxiliary device comprises a smart metasurface.

6. The method of claim 1, wherein adjusting the multipath auxiliary device based on the device parameter comprises:
adjusting, by a mechanical apparatus of the multipath auxiliary device, an angle of a reflection panel in the multipath auxiliary device based on a position indicated by the device parameter.

7. The method of claim 1, further comprising:
acquiring second sensing data transmitted by the second communication node, wherein the second sensing data is determined through multi-beam scanning of the second communication node.

8. The method of claim 7, further comprising:
predicting node information of the second communication node based on the second sensing data, the first sensing data currently determined by the first communication node through multi-beam scanning, and last sensing data, wherein the node information comprises a node position and a motion state, and the last sensing data comprises one or more of the first sensing data determined by the first communication node last time through multi-beam scanning or the second sensing data acquired last time;
adjusting the first beam parameter of the first beam, the second beam parameter of the second beam, and the device parameter of the multipath auxiliary device based on the predicted node information;
adjusting the multipath auxiliary device based on the adjusted device parameter; and
controlling the antenna array based on the adjusted first beam parameter and the adjusted second beam parameter.

9. The method of claim 1, wherein a phase difference between the first beam and the second beam at the second communication node is less than a set threshold.

10. An information acquisition method, the method being applied by a second communication node and comprising:
receiving a first beam and a second beam of a first communication node, wherein a beam parameter of the first beam and a beam parameter of the second beam are determined based on first sensing data for the second communication node acquired by the first communication node, and the second beam is sent to the second communication node after passing through a multipath auxiliary device of the first communication node; and
acquiring same information carried by the first beam and the second beam.

11. The method of claim 10, further comprising:
determining second sensing data using multi-beam scanning, wherein the second sensing data comprises one or more of second environmental information of a communication environment of the second communication node, position information of the second communication node, or a movement speed of the second communication node.

12. The method of claim 11, further comprising:
transmitting the second sensing data to the first communication node.

13. A first communication node, comprising:
one or more processors;
a storage apparatus configured to store one or more programs; and
an antenna array and a multipath auxiliary device at a set distance from the antenna array, wherein the multipath auxiliary device is configured to send a second beam of the antenna array to a second communication node;
wherein when executed by the one or more processors, the one or more programs cause the one or more processors to perform the method of any one of claims 1 to 9.

14. The first communication node of claim 13, wherein the multipath auxiliary device comprises a mechanical apparatus and a reflection panel.

15. The first communication node of claim 13, wherein the multipath auxiliary device comprises a smart metasurface.

16. A second communication node, comprising:
one or more processors; and
a storage apparatus configured to store one or more programs;
wherein when executed by the one or more processors, the one or more programs cause the one or more processors to perform the method of any one of claims 10 to 12.

17. A storage medium storing a computer program which, when executed by a processor, causes the processor to perform the method of any one of claims 1 to 12.
